# EUROPEAN PATENT SPECIFICATION

(11) **EP 1 108 769 B1**
(45) Date of publication and mention of the grant of the patent: **24.03.2004**
(21) Application number: 00311219.0
(22) Date of filing: 15.12.2000
(51) Int. Cl.: C09J 7/04

(54) **Fabric based adhesive tapes**
Klebebänder auf Basis von Gewebematerial
Rubans adhésifs à base de tissu

(30) Priority: 16.12.1999 GB 9929635
(43) Date of publication of application: 20.06.2001
(73) Proprietor: SCAPA GROUP PLC, Blackburn, Lancashire BB2 6AY (GB)
(72) Inventor: Symons, Keith, Liverpool, Merseyside L25 5LA (GB)
(74) Representative: Middlemist, Ian Alastair

(56) References cited:
- WO-A-95/06449
- US-A- 4 346 700
- US-A- 4 772 499

## Description

The present invention relates to adhesive tapes of the type having a non-woven fabric substrate with an adhesive coating thereon.

Conventionally fabric based adhesive tapes comprise any substrate with an uneven surface, such as a woven fabric or a stitch bonded fabric, onto which is coated an adhesive.

It is desirable for an adhesive tape to have sufficient strength in the longitudinal direction, i.e. the direction in which the tape is to be unwound. However, it is further desirable that the tape is readily tearable e.g. by hand in the cross direction such that the tape may be readily severed from the roll. Tape backings of plastics or non-woven material often require scissors or other blade means to be cut to length as they lack this property. The present invention seeks to provide a tape having the aforementioned desirable properties. An example of a tape with perforated tear lines is described in WO 95/06449. This does maintain longitudinal strength, but the locations where separation can be performed are limited, so that the tape cannot be separated closely to a required length. US 4772499 describes a fibrous non-woven fabric having bonded and unbonded zones whereby the fabric can be torn across outside of the bonded zones.

According to the present invention there is provided an adhesive tape comprising a non-woven fabric backing substrate and an adhesive coating applied to at least one side of the backing substrate, the backing substrate being formed with weakened areas comprising a pattern of isolated thermally bonded zones arranged so as to permit tearing of the tape at a desired location.

The weakened areas improve the tear characteristics of the tape.

The pattern of isolated thermally bonded zones is ideally such that the zones are substantially aligned in the cross direction and adjacent zones are substantially offset in the longitudinal direction. This arrangement provides lines of weakness in the cross direction and attempts to minimise lines of weakness in the longitudinal direction.

The thermal bond zones may be of any desired shape. In one embodiment the thermal bond zones are rectangular. In another, such as in a trapezoidal shaped thermal bond zone, points are provided at the sides of the thermal bond zones so as to achieve higher stress concentration at these points. Ideally such points extend in the cross direction.

The non-woven backing layer is preferably dry laid, spun bonded or melt blown. However it will be appreciated that any suitable form of non-woven or similar material or fabric can be used as desired or as appropriate. Where the backing layer is dry laid, the fibres may be aligned randomly, or more preferably in a cross direction. Preferably, the backing layer is formed from fibres, or a film, of a polymeric material for example polypropylene. Most preferably the backing layer is formed from polyester fibres or film.

Preferably the adhesive is a pressure sensitive adhesive. When such adhesives are applied to a non-woven backing tape so as to form a tape in accordance with the invention, the roll-up of such is possible without the use of a liner.

By way of example only two embodiments of the present invention will now be described by way of example with reference to the accompanying drawings, in which:
Fig.1 is a schematic diagram of the backing substrate of a tape in accordance with the present invention having a pattern of weakened thermal bond zones therein; and
Fig.2 is a schematic diagram showing an alternative shape for a thermal bond zones to that illustrated in fig.1.

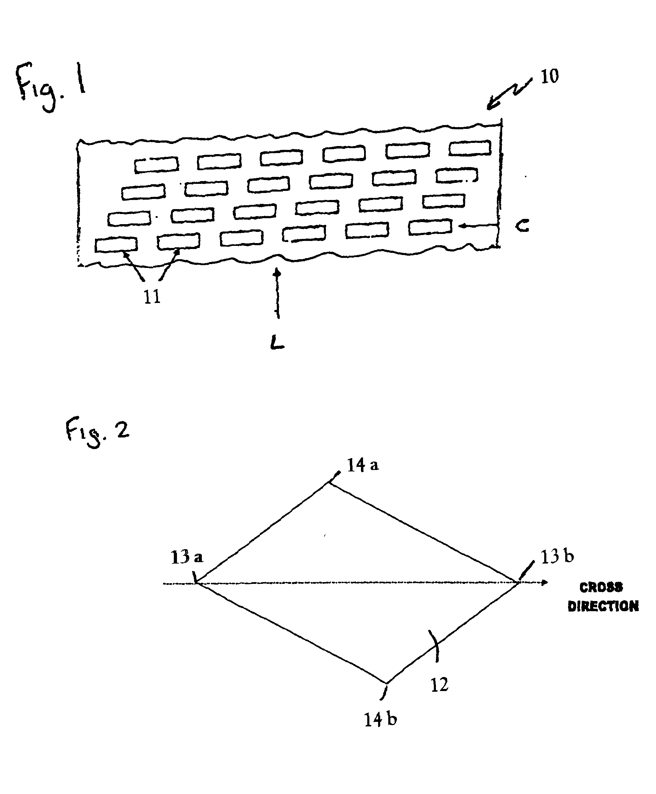

Fig.1 shows an arrangement in which a non-woven backing of an adhesive tape has been treated to create a pattern of weakened zones across the tape backing layer to allow straight clean tearing of the tape when in use. This is achieved by a thermal bonding technique.

In Fig.1 a non-woven fabric 10 acts as a backing substrate for a pressure sensitive adhesive tape. Prior to the application to the substrate of the adhesive a pattern of weakened thermal bond zones 11 is applied to the fabric. It is clear from the figure that the thermal bond zones are arranged in a series of lines in the cross direction (Arrow C), but no two adjacent thermal bond zones are aligned in a direction perpendicular thereto (Arrow L). This arrangement allows for tearing in the cross direction and resists tearing in the longitudinal direction.

The thermal bond zones shown by way of example in Fig.1 are rectangular. Fig.2 shows an alternative shape 12 for the thermal bond zones; that is a trapezoidal shape having its long diagonal aligned in the cross direction. The acute angled points 13a, 13b are aligned in the cross direction and have a high stress concentration at their tips. This facilitates easy tearing in the cross direction between the points of adjacent zones 12. The points 14a, 14b aligned in the longitudinal direction are offset in the cross direction as in fig 1, and have an obtuse angle so that they have a lesser stress concentration at the points, so that tearing is more difficult.

It is of course to be understood that the above description is by way of illustration only. Many modifications and variations are possible, such as for example lines of closely spaced zones extending in the cross direction, and separated in the longitudinal directions by several times the cross direction spacing.

## Claims

1. An adhesive tape, comprising a non woven backing substrate (10) and an adhesive coating applied to at least one side of the backing substrate, **characterised in that** the backing substrate (10) is formed with weakened areas (11) comprising a pattern of isolated thermally bonded zones arranged so as to permit tearing of the tape at the desired location.

2. An adhesive tape, according to claim 1 **characterised in that** the weakened areas (11) are substantially aligned in the direction across the tape (C) and are substantially offset in the longitudinal direction (L).

3. An adhesive tape, according to claim 2, **characterised in that** the weakened areas (11) are rectangular.

4. An adhesive tape, according to claim 2 **characterised in that** the weakened areas (11) are trapezoidal in shape, providing acute angled points (13a, 13b) aligned in the cross-direction, and obtuse angled points (14a, 14b) aligned in the longitudinal directions.

## Patentansprüche

1. Klebeband mit einem nichtgewebten Grundsubstrat (10) und einer auf mindestens eine Seite des Grundsubstrats aufgebrachten Klebschicht,
**dadurch gekennzeichnet, daß** in dem Grundsubstrat (10) geschwächte Bereiche (11) ausgebildet sind, die ein Muster von isolierten thermoverfestigten Zonen aufweisen, die derart angeordnet sind, daß ein Abreißen des Bandes an der gewünschten Stelle möglich ist.

2. Klebeband nach Anspruch 1,
**dadurch gekennzeichnet, daß** die geschwächten Bereiche (11) in Querrichtung (C) des Bandes im wesentlichen fluchtend und in Längsrichtung (L) im wesentlichen versetzt zueinander ausgerichtet sind.

3. Klebeband nach Anspruch 2,
**dadurch gekennzeichnet, daß** die geschwächten Bereiche (11) rechteckig sind.

4. Klebeband nach Anspruch 2,
**dadurch gekennzeichnet, daß** die geschwächten Bereiche (11) trapezförmig ausgebildet sind, so daß in Querrichtung ausgerichtete, spitzwinklige Punkte (13a, 13b) und in Längsrichtung ausgerichtete, stumpfwinklige Punkte (14a, 14b) gebildet sind.

## Revendications

1. Ruban adhésif, comprenant un substrat de support (10) non tissé et un revêtement adhésif appliqué sur au moins un côté du substrat de support, **caractérisé en ce que** le substrat de support (10) est formé avec des zones affaiblies (11) comprenant un motif de zones isolées liées thermiquement agencées de façon à permettre la déchirure du ruban à l'emplacement souhaité.

2. Ruban adhésif selon la revendication 1, **caractérisé en ce que** les zones affaiblies (11) sont sensiblement alignées dans la direction transversale du ruban (C) et sont sensiblement décalées dans la direction longitudinale (L).

3. Ruban adhésif selon la revendication 2, **caractérisé en ce que** les zones affaiblies (11) sont rectangulaires.

4. Ruban adhésif selon la revendication 2, **caractérisé en ce que** les zones affaiblies (11) ont une forme trapézoïdale, ce qui fournit des points à angles aigus (13a, 13b) alignés dans la direction transversale, et des points à angles obtus (14a, 14b) alignés dans la direction longitudinale.
